# EUROPEAN PATENT SPECIFICATION

(11) **EP 3 859 216 B1**
(45) Date of publication and mention of the grant of the patent: **11.12.2024**
(21) Application number: 21154288.1
(22) Date of filing: 29.01.2021
(51) Int. Cl.: F24D 12/02, F24D 15/04, F24D 19/10

(54) **HEAT PUMP AND METHOD THEREOF**
WÄRMEPUMPE UND VERFAHREN DAFÜR
POMPE À CHALEUR ET PROCÉDÉ ASSOCIÉ

(30) Priority: 30.01.2020 KR 20200011332
(43) Date of publication of application: 04.08.2021
(73) Proprietor: LG Electronics Inc., Seoul 07336 (KR)
(72) Inventor: LEE, Youngmin, 08592 Seoul (KR); RYU, Jihyeong, 08592 Seoul (KR); CHO, Eunjun, 08592 Seoul (KR)
(74) Representative: Ter Meer Steinmeister & Partner

(56) References cited:
- EP-A1- 2 159 495
- EP-A1- 3 252 383
- DE-A1- 2 659 806
- KR-A- 20130 135 022

## Description

### BACKGROUND OF THE INVENTION

### Field of the disclosure

The present disclosure relates to a heat pump capable of providing a heating function and a hot water supply function in conjunction with a boiler and a method of operating the same.

### Description of the Related Art

In general, a heat pump is a device that that transfer heat from a low temperature source to a high temperature source and vice versa and may include an outdoor unit including a compressor and an outdoor heat exchanger, and an indoor unit including an expansion valve and an indoor heat exchanger.

The heat pump can be used for a heating function that increases an indoor temperature or a hot water supply function that provides hot water to a user by heating water through heat exchange of a refrigerant, so that the use of fossil fuels can be replaced.

In the case of using the heat pump as a heat source for heating or hot water supply, when an outdoor temperature is lowered by a certain level or more, the efficiency is rapidly deteriorated, and the heating function or the hot water supply function may be insufficiently provided with only the heat pump. Therefore, in the related art, when the outdoor temperature is lowered by a certain level or more, the heat pump and the boiler interlock, and the boiler instead of the heat pump provides the heating function or the hot water supply function.

On the other hand, in general, in consideration of the user's expectation that high-temperature hot water is provided quickly rather than rapidly increasing indoor temperature, both the heat pump and the boiler provide the hot water supply function prior to the heating function. In this case, while the outdoor temperature is lowered by more than a certain level and the boiler instead of the heat pump provides the heating function, if the boiler provides the hot water supply function due to the demand for hot water supply, there is a problem that the heating function is temporarily stopped and the indoor temperature is lowered. In addition, there is also a problem in that it is difficult for the heat pump to determine whether the boiler stops providing the heating function and provides the hot water supply function because heat pumps and boilers are mostly products of different manufacturers, and the operation status of one side is not monitored by the other.

Conventionally, in order to solve this problem, a hot water tank is provided for storing water used for hot water supply, and water stored in the hot water tank is heated through the heat pump. Through this, the boiler continues to provide the heating function, and water stored in the hot water tank is used for hot water supply.

However, even according to the conventional method, since the hot water tank must be separately provided to supply hot water, there is a problem in that price competitiveness is lowered due to an increase in installation cost. In addition, since it is necessary to provide the hot water supply function through the heat pump whose efficiency is reduced due to a low outdoor temperature, there is a problem that the efficiency of the heat pump is further reduced.

EP 2 159 495 A1 presents a controller for use with a heating system that has two heat sources in the form of a boiler and a heat pump which heat water for the transfer of heat to a load. The controller is coupled to a temperature sensor for sensing a return temperature of the water and to a temperature sensor for sensing a supply temperature of the water, and to the boiler and heat pump. The controller disables one or both heat sources according to the return and supply temperatures. A heating system comprising the controller and a method of controlling such a heating system are also provided.

### SUMMARY OF THE INVENTION

It is an object of the present disclosure to solve the above and other problems.

It is another object of the present invention to provide a heat pump that determines whether the boiler provides a hot water supply function without communication with the boiler and provide a heating function while the boiler provides the hot water supply function, and method thereof.

The object is solved by the features of the independent claims. Preferred embodiments are given in the dependent claims.

A heat pump in accordance with an exemplary embodiment of the present invention for accomplishing the above and other objects includes a compressor configured to compress a refrigerant, a first temperature sensor disposed in heating pipes connected to a heating device for performing indoor heating and configured to sense a temperature of water flowing through the heating pipes, and a controller, wherein the controller is configured to determine whether a boiler provides a heating function based on a sensing value of the first temperature sensor.

Preferably, the controller is configured to control to operate the compressor when the boiler does not provide the heating function.

In some or more embodiments, the heat pump may further comprise a second temperature sensor configured to sense an outdoor temperature.

The controller is configured to determine whether the boiler provides the heating function based on the sensing value of the first temperature sensor.

Preferably, the controller may be configured to determine whether the boiler provides the heating function based on the sensing value of the first temperature sensor when a sensing value of the second temperature sensor is less than a reference temperature.

In some or more embodiments, the controller may be configured to control the compressor to stop the operation when the sensing value of the second temperature sensor is less than the reference temperature, and/or may control the compressor to operate when the sensing value of the second temperature sensor is higher than the reference temperature.

According to the invention the controller is configured to calculate a rate of change of the temperature of the water flowing through the heating pipes based on the sensing value of the first temperature sensor and to determine whether the boiler provides a heating function based on the calculated rate of change of the temperature of the water.

Preferably, the controller may be configured to calculate a rate of change of the temperature of the water flowing through the heating pipes based on the sensing value of the first temperature sensor when the sensing value of the second temperature sensor is less than the reference temperature.

In some or more embodiments, the controller may be configured to determine that the boiler does not provide the heating function when the calculated rate of change of the temperature of the water is less than a first reference rate, and/or may determine that the boiler provides the heating function when the calculated rate of change of the temperature of the water exceeds a second reference rate greater than the first reference rate.

In some or more embodiments, the heat pump may further comprise a water refrigerant heat exchanger configured to exchange heat with water and the refrigerant compressed by the compressor.

In some or more embodiments, the heat pump may further comprise a first valve disposed between the heating pipes and a hot-water pipe through which water discharged from the water refrigerant heat exchanger flows.

In some or more embodiments, the controller may be configured to control the first valve to be turned off so that water does not flow from the hot-water pipe to the heating pipes.

In some or more embodiments, the heat pump may further comprise a bypass pipe connecting the first valve and a cold-water pipe through which water supplied to the water refrigerant heat exchanger flows.

Preferably, the heating pipes may be respectively connected to the first valve and the boiler.

Preferably, the water discharged from the water refrigerant heat exchanger and flowing through the hot-water pipe may flow through the bypass pipe when the first valve is turned off.

Preferably, the heat pump may further comprise a second valve disposed in a boiler recovery pipe through which water supplied to the boiler flows.

Preferably, the controller may be configured to control the second valve to be turned off so that water is not supplied to the boiler when the sensing value of the second temperature sensor is higher than the reference temperature, or when the sensing value of the second temperature sensor is less than the reference temperature and the boiler does not provide the heating function.

Preferably, the cold-water pipe may be connected to the heating device so that water discharged from the heating device may flow through the cold-water pipe.

Preferably, the boiler recovery pipe may be connected to the cold-water pipe.

A method of operating a heat pump in accordance with the invention for accomplishing the above and other objects comprises calculating a rate of change of a temperature of water flowing through heating pipes based on a sensing value of a first temperature sensor, and determining whether a boiler provides a heating function based on the calculated rate of change of the temperature of the water, and operating a compressor compressing a refrigerant when the boiler does not provide the heating function, wherein the first temperature sensor is disposed in heating pipes connected to a heating device for performing indoor heating and configured to sense a temperature of water flowing through the heating pipes.

In some or more embodiments, the determining whether the boiler provides the heating function may comprise determining whether the boiler provides the heating function based on the sensing value of the first temperature sensor when a sensing value of a second temperature sensor configured to sense an outdoor temperature is less than a reference temperature.

In some or more embodiments, the method may further comprise stopping the operation of the compressor when the sensing value of the second temperature sensor is less than the reference temperature; and/ or operating the compressor when the sensing value of the second temperature sensor is higher than the reference temperature.

In some or more embodiments, the determining whether the boiler provides the heating function may further comprise calculating rate of change of the temperature of the water flowing through the heating pipes based on the sensing value of the first temperature sensor when the sensing value of the second temperature sensor is less than the reference temperature; and/or determining whether the boiler provides the heating function based on the calculated rate of change of the temperature of the water.

In some or more embodiments, the determining whether the boiler provides the heating function based on the calculated rate of change of the temperature of the water may comprise determining that the boiler does not provide the heating function when the calculated rate of change of the temperature of the water is less than a first reference rate; and/or determining that the boiler provides the heating function when the calculated rate of change of the temperature of the water exceeds a second reference rate greater than the first reference rate.

The additional range of applicability of the present disclosure will become apparent from the following detailed description. However, because various changes and modifications will be clearly understood by those skilled in the art within the scope of the present disclosure, it should be understood that the detailed description and specific embodiments such as preferred embodiments of the present disclosure are merely given by way of example.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a view schematically illustrating a heat pump according to an embodiment of the present disclosure.
FIG. 2 is a block diagram of a system including a heat pump according to an embodiment of the present disclosure.
FIG. 3 is a block diagram of a heat pump according to an embodiment of the present disclosure.
FIG. 4 is a flowchart illustrating a method of operating a heat pump according to an embodiment of the present disclosure.
FIGs. 5 to 7C are views referred to for explanation of a method of operating a heat pump.

### DETAILED DESCRIPTION OF THE PREFERRED EMBODIMENTS

Hereinafter, the present disclosure will be described in detail with reference to the accompanying drawings. In order to clearly and briefly describe the present disclosure, components that are irrelevant to the description will be omitted in the drawings. The same reference numerals are used throughout the drawings to designate the same or similar components.

Terms "module" and "part" for elements used in the following description are given simply in view of the ease of the description, and do not carry any important meaning or role. Therefore, the "module" and the "part" may be used interchangeably.

It should be understood that the terms "comprise", "include", "have", etc. when used in this specification, specify the presence of stated features, integers, steps, operations, elements, components, or combinations of them but do not preclude the presence or addition of one or more other features, integers, steps, operations, elements, components, or combinations thereof.

It will be understood that, although the terms "first", "second", etc. may be used herein to describe various elements, these elements should not be limited by these terms. These terms are only used to distinguish one element from another element.

Unless otherwise defined, all terms including technical and scientific terms used herein have the same meaning as commonly understood by one of ordinary skill in the art to which the present disclosure belongs. Further, terms defined in a common dictionary will not be interpreted in an idealized or overly formal sense unless expressly so defined herein.

In the drawings, the thicknesses or the sizes of elements and graphs may be exaggerated, omitted or simplified to more clearly and conveniently illustrate the present disclosure.

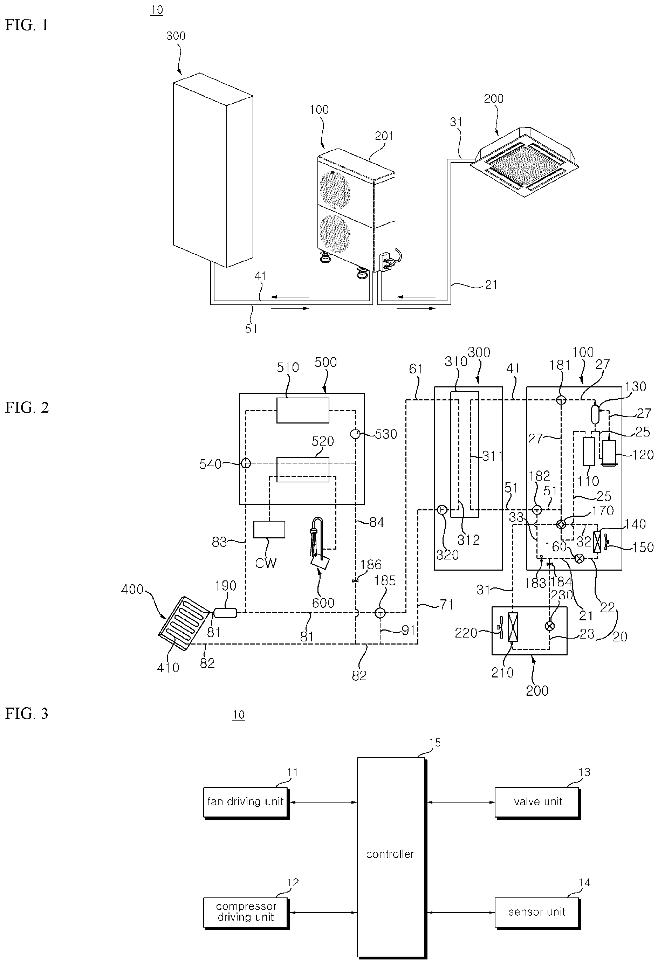

FIG. 1 is a view schematically illustrating a heat pump, and FIG. 2 is a block diagram of a system including the heat pump according to an embodiment of the present disclosure.

Referring to FIGs. 1 and 2, the heat pump 10 may include an outdoor unit 100, an indoor unit 200, and/or a heat exchange device 300 for exchanging heat between compressed refrigerant and water.

The heat pump system including the heat pump 10 may further include a heating device 400 and/or a boiler 500 for performing indoor heating.

The outdoor unit 100 may include a compressor 120 compressing a refrigerant, an accumulator 110 disposed in a suction passage 25 of the compressor 120 to prevent the liquid refrigerant from flowing into the compressor 120, an oil separator 130 disposed in a discharge passage 27 of the compressor 120 to separate the oil from the refrigerant and oil discharged from the compressor 120 and recover it to the compressor 120 and/or a switching valve 170 for selecting a refrigerant flow path for heating/cooling operation.

The outdoor unit 100 may further include a plurality of sensors, valves, and the like.

The outdoor unit 100 and the indoor unit 200 may include heat exchangers 140 and 210, fans 150 and 220, and/or expansion mechanisms 160 and 230, respectively, and perform cooling air conditioning for cooling indoor air or heating air conditioning for heating indoor air according to a flow direction of a refrigerant. For example, the indoor unit 200 may receive compressed refrigerant from the outdoor unit 100 and discharge hot air or cold air into the room.

The outdoor heat exchanger 140 may condense or evaporate a refrigerant. The outdoor heat exchanger 140 may be configured as a heat exchanger for performing heat exchange between outdoor air and a refrigerant, or be configured as a heat exchanger for performing heat exchange between cooling water and a refrigerant.

For example, when the outdoor heat exchanger 140 is configured as a heat exchanger in which heat exchange between outdoor air and refrigerant is performed, the outdoor fan 150 may be disposed on one side of the outdoor heat exchanger 140 and blow outdoor air to the outdoor heat exchanger 140 to promote heat dissipation of the refrigerant. Hereinafter, a case where the outdoor heat exchanger 140 is configured as an air refrigerant heat exchanger in which outdoor air and refrigerant heat exchange with each other is described as an example.

The outdoor heat exchanger 140 may be connected to the indoor heat exchanger 210 and the heat exchanger connection pipe 20, and the expansion mechanisms 160 and 230 may be installed in the heat exchanger connection pipe 20.

The heat exchanger connection pipe 32 may include an expansion device connection pipe 21 to which the outdoor expansion device 160 and the indoor expansion device 230 are connected, an Outdoor heat exchanger-outdoor expansion device connection pipe (22) to which the outdoor heat exchanger 140 and the outdoor expansion device 160 are connected, and an Indoor expansion device-indoor heat exchanger connection pipe (23) to which the indoor heat exchanger 210 and the indoor expansion device 230 are connected.

The indoor heat exchanger 210 may be a heat exchanger that cools or heats a room through heat exchange between indoor air and a refrigerant. The indoor fan 220 may be disposed on one side of the indoor heat exchanger 210 to blow indoor air to the indoor heat exchanger 210.

In the case of a cooling mode in which the heat pump 10 cools the room through the indoor unit 200, the heat exchanger 210 may function as an evaporator since the refrigerant compressed by the compressor 120 of the outdoor unit 100 sequentially passes through the outdoor heat exchanger 140, the expansion mechanisms 160 and 230, the indoor heat exchanger 210, and the compressor 120.

On the other hand, in the case of the heating mode in which the heat pump 10 heats the room through the indoor unit 200, the heat exchanger 210 may function as a condenser since the refrigerant compressed by the compressor 120 of the outdoor unit 100 sequentially passes through the indoor heat exchanger 210, the expansion mechanisms 160 and 230, the outdoor heat exchanger 140, and the compressor 120.

The switching valve 170 may change the flow direction of the refrigerant so that the refrigerant flows in the order of the compressor 120, the outdoor heat exchanger 140, and the indoor heat exchanger 210, or in the order of the compressor 120, the indoor heat exchanger 210, and the outdoor heat exchanger 210.

The switching valve 170 may be connected to the compressor 120 through the compressor suction passage 25 and the compressor discharge passage 27. The switching valve 170 may be connected to the indoor heat exchanger 210 through the indoor heat exchanger connection pipe 31. The switching valve 170 may be connected to the outdoor heat exchanger 140 through the outdoor heat exchanger connection pipe 32.

The outdoor unit 100 may include a refrigerant control valve 181 capable of selectively supplying the refrigerant supplied from the compressor discharge passage 27 to the heat exchange device 300 or the switching valve 170. When the refrigerant control valve 181 is configured as a three-way valve, the refrigerant control valve 181 may be disposed on the compressor discharge passage 27, a heat exchange device supply passage 41 for supplying the refrigerant to the heat exchange device 300 may be branched from the refrigerant control valve 181.

The outdoor unit 100 may further include an auxiliary refrigerant control valve 182. The auxiliary refrigerant control valve 182 may operate so that the refrigerant transferred from the heat exchange device 300 to the outdoor unit 100 is supplied to the heat exchanger bypass passage 33 or to the switching valve 170. The refrigerant control valve 181 may be configured as a three-way valve.

The outdoor unit 100 may further include a heat exchanger bypass valve 183 disposed in the heat exchanger bypass passage 33 to regulate the flow of refrigerant, and a liquid refrigerant valve 184 disposed between the heat exchanger bypass passage 33 and the indoor expansion mechanism 230 to regulate the flow of the refrigerant.

The heat exchanger bypass valve 183 may be turned on when the heat pump 100 provides a heating function, and be turned off when the heat pump 100 performs an air conditioning function or simultaneous operation of the air conditioning function and the heating function.

The liquid refrigerant valve 184 may be turned on when the heat pump 100 performs the air conditioning function or simultaneous operation of the air conditioning function and the heating function, and be turned off when providing the heating function.

The heat exchange device 300 may receive compressed refrigerant from the outdoor unit 100 through the heat exchange device supply passage 41, and deliver the refrigerant to the outdoor unit 100 through the heat exchange device recovery passage 51.

The heat exchange device 300 may include a water refrigerant heat exchanger 310 for exchanging heat with water and refrigerant supplied from the outdoor unit 100. The water refrigerant heat exchanger 310 may be composed of a double tube heat exchanger in which the refrigerant passage 311 and the water passage 312 are formed inside/outside with a heat transfer member interposed therebetween. The water refrigerant heat exchanger 310 may also be composed of a plate-type heat exchanger in which the refrigerant passage 311 and the water passage 312 are alternately formed with a heat transfer member therebetween. Hereinafter, a case where the water refrigerant heat exchanger 310 is configured as a plate heat exchanger will be described as an example.

The refrigerant passage 311 of the water refrigerant heat exchanger 310 may be connected to the heat exchange device supply passage 41 and the heat exchange device recovery passage 51.

The refrigerant supplied to the water refrigerant heat exchanger 310 through the heat exchanger supply passage 41 may be heat-exchanged while flowing through the refrigerant passage 311 and be transferred to the outdoor unit 100 through the heat exchanger recovery passage 51.

The water passage 312 of the water refrigerant heat exchanger 310 may be connected to a hot-water pipe 61 through which water is discharged from the water refrigerant heat exchanger 310 and a cold-water pipe 71 through which water is supplied to the water refrigerant heat exchanger 310.

A recovery pump 320 for pumping water circulating through the water refrigerant heat exchanger 310 may be disposed in the cold-water pipe 71. The recovery pump 320 may operate to circulate water through the water refrigerant heat exchanger 310 even when the refrigerant is not supplied from the outdoor unit 100 to the heat exchanger 300 to prevent freezing.

The heating device 400 may include a heat dissipation tube 410, and heat the indoor floor using hot water flowing along the heat dissipation tube 410. The heating device 400 may be connected to the heating supply pipe 81 and the heating recovery pipe 82.

Water supplied through the heating supply pipe 81 may be heat-exchanged while flowing through the heat dissipation pipe 410, and be discharged through the heating recovery pipe 82. The heating supply pipe 81, the heat dissipation pipe 410, and the heating recovery pipe 82 may be referred to as heating pipes.

The heating supply pipe 81 may be connected to the hot-water pipe 61, and the heating recovery pipe 82 may be connected to the cold-water pipe 71.

The heat pump 10 may further include a temperature sensor 190 disposed in the heating pipes and detect a temperature of water flowing through the heating pipes. For example, the temperature sensor 190 may be disposed in the heating supply pipe 81 among the heating pipes to detect the temperature of water supplied to the heating device 400.

A hot water supply control valve 185 may be disposed between the heating supply pipe 81 and the hot-water pipe 61. For example, when the hot water supply control valve 185 is turned on, water may flow from the hot-water pipe 61 to the heating supply pipe 81. For example, when the hot water supply control valve 185 is turned off, the flow of water between the hot-water pipe 61 and the heating supply pipe 81 may be blocked, so that water may not flow from the hot-water pipe 61 to the heating supply pipe 81.

When the hot water supply control valve 185 is configured as a three-way valve, the hot water supply control valve 185 may be connected to the bypass pipe 91 connected to the cold-water pipe 71. Water may flow from the hot-water pipe 61 to the cold-water pipe 71 when the hot water supply control valve 185 is turned off.

The boiler 500 may include a combustion heating unit 510 that heats water by burning fossil fuels, and boiler heat exchange unit 520 for heat exchange between water heated by the combustion heating unit 510 and water supplied from the water supply (CW). For example, when the boiler 500 provides a hot water supply function, the boiler 500 may heat water through the combustion heating unit 510 and transfer it to the boiler heat exchange unit 520, and water supplied from the water supply (CW) may be heated through heat exchange with water heated by the combustion heating unit 510 and then supplied to the hot water supply unit 600.

The boiler 500 may further include a boiler pump 530 that pumps water circulating through the boiler 500.

The boiler 500 may further include a boiler bypass valve 540. The boiler bypass valve 540 may be configured as a three-way valve. For example, when the boiler 500 provides the heating function, the boiler bypass valve 540 may be controlled so that water heated by the combustion heating unit 510 flows through the boiler supply pipe 83. For example, when the boiler 500 provides the hot water supply function, the boiler bypass valve 540 may operate to transfer water heated by the combustion heating unit 510 to the boiler heat exchange unit 520.

The boiler 500 may be connected to the heating supply pipe 81 and the heating recovery pipe 82 through the boiler supply pipe 83 and a boiler recovery pipe 84. For example, water heated in the boiler 500 may flow to the heating supply pipe 81 through the boiler supply pipe 83, and water discharged from the heating device 400 to the heating recovery pipe 82 may flow to the boiler 500 through the boiler recovery pipe 84.

The heat pump 10 may further include a boiler valve 186 disposed in the boiler recovery pipe 84 to regulate the flow of water. For example, when the boiler 500 does not operate as the heat pump 10 provides the heating function, the flow of water flowing from the heating recovery pipe 82 to the boiler 500 may be blocked because of the boiler valve 186 turned off. For example, when the boiler 500 provides the heating function, the boiler valve 186 may be turned on, and water discharged from the heating device 400 to the heating recovery pipe 82 may be transferred to the boiler 500.

The heat pump 10 may control the boiler 500 to be turned on or turned off.

The heat pump 10 may turn on/off the power of the boiler 500 without performing communication with the boiler 500. For example, the heat pump 10 may transmit a signal to a component (e.g. a switch) that transmits a power signal to the boiler 500 to turn on/off the power of the boiler 500.

Even when the power of the boiler 500 is turned off by the heat pump 10, the power of the boiler 500 may be turned on when the user requests the use of hot water, and the boiler 500 may supply hot water to the hot water supply unit 600 by using the water heated through the combustion heating unit 510.

FIG. 3 is a block diagram of a heat pump according to an embodiment of the present disclosure.

Referring to FIG. 3, the heat pump 10 may include a fan driving unit 11, a compressor driving unit 12, a valve unit 13, a sensor unit 14 and/or a controller 15.

The fan driving unit 11 may drive at least one fan included in the heat pump 10. For example, the fan driving unit 11 may drive the outdoor fan 150 and/or the indoor fan 220.

The fan driving unit 11 may include a rectifier that rectifies and outputs AC power to DC power, a dc capacitor that stores the pulsating voltage from the rectifier, an inverter that includes a plurality of switching elements and converts DC power to 3-phase AC power at a predetermined frequency, and/or a motor that drives the fans 150 and 230 according to the 3-phase AC power output from the inverter.

The fan driving unit 11 may include components for driving the outdoor fan 150 and the indoor fan 220, respectively.

The compressor driving unit 12 may drive the compressor 120.

The compressor driving unit 12 may include a rectifier that rectifies and outputs AC power to DC power, a dc capacitor that stores the pulsating voltage from the rectifier, an inverter that includes a plurality of switching elements and converts DC power to 3-phase AC power at a predetermined frequency, and/or a compressor motor that drives the compressor 120 according to the three-phase AC power output from the inverter.

The valve unit 13 may include at least one valve. At least one valve included in the valve unit 13 may operate under the control of the controller 15. For example, the valve unit 13 may include the switching valve 170, the auxiliary refrigerant control valve 182, the heat exchanger bypass valve 183, the liquid refrigerant valve 184, the hot water supply control valve 185, and/or the boiler valve 186.

The sensor unit 14 may include at least one sensor, and transmit data on a sensing value sensed through at least one sensor to the controller 15. At least one sensor included in the sensor unit 14 may be disposed inside the outdoor unit 100 and/or the indoor unit 200. For example, the sensor unit 14 may include a heat exchanger temperature sensor disposed inside the outdoor heat exchanger 140 to detect condensation temperature or evaporation temperature, a pressure sensor to detect the pressure of gaseous refrigerant flowing through each pipe, and/or a pipe temperature sensor to detect a temperature of a fluid flowing through each pipe.

The sensor unit 14 may include an indoor temperature sensor to detect an indoor temperature and/or an outdoor temperature sensor to detect an outdoor temperature. For example, the outdoor temperature sensor may be disposed in the outdoor unit 100, and the indoor temperature sensor may be disposed in the indoor unit 200.

The sensor unit 14 may include a temperature sensor 190 disposed in the heating pipes connected to the heating device 400 to detect a temperature of water flowing through the heating pipes.

The controller 15 may be connected to each component included in the heat pump 10 and control the overall operation of each component. The controller 15 may transmit and receive data between components included in the heat pump 10.

The controller 15 may be disposed in at least one of the indoor unit 200 and/or the heat exchange device 300 as well as the outdoor unit 100.

The controller 15 may include at least one processor and control the overall operation of the heat pump 10 using the processor. The processor may be a general processor such as a central processing unit (CPU). Of course, the processor may be a dedicated device such as an ASIC or another hardware-based processor.

The controller 15 may control the operation of the fan driving unit 11. For example, the controller 15 may change the rotation speed of the fans 150 and 230 by changing the frequency of the three-phase AC power output to the outdoor fan motor through operation control of the fan driving unit 11.

The controller 15 may control the operation of the compressor driving unit 12. For example, the controller 15 may change the operating frequency of the compressor 120 by changing the frequency of the three-phase AC power output to the compressor motor through operation control of the compressor driving unit 12.

The controller 15 may control an operation of at least one valve included in the valve unit 13 according to a function provided by the heat pump 10. For example, when the heat pump 10 provides the heating function, the controller 15 may control the heat exchanger bypass valve 183 to be turned on and control the liquid refrigerant valve 184 to be turned off. For example, when the heat pump 10 does not provide the heating function, the controller 15 may control the hot water supply control valve 185 to be turned off so that water does not flow from the hot-water pipe 61 to the heating supply pipe 81.

The controller 15 may control each component included in the heat pump 10 based on a sensing value of at least one sensor included in the sensor unit 14.

The controller 15 may determine a function provided by the heat pump 10 based on a sensing value of the outdoor temperature sensor. For example, when the sensing value of the outdoor temperature sensor is less than the reference temperature, the controller 15 may stop the operation of the compressor 120 so that the heat pump 10 does not provide the heating function. Here, the reference temperature may be a temperature of outdoor air (e.g. -7°C) at which the efficiency of the heat pump 10 is lowered.

The controller 15 may determine an operating state of the boiler 500 based on the sensing value of the temperature sensor 190. For example, the controller 15 may calculate a rate of change of water temperature based on the sensing value of the temperature sensor 190, and determine whether the boiler 500 provides the heating function according to the calculated rate of change of the water temperature. In this case, the controller 15 may determine whether the boiler 500 provides the heating function when the sensing value of the outdoor temperature sensor is less than the reference temperature.

The controller 15 may control power on/off of the boiler 500. For example, the heat pump 10 may further include a component (e.g. a switch) for transmitting a power signal to the boiler 500, and the controller 15 may transmit a signal to the component (e.g. a switch) to turn on/off the power of the boiler 500.

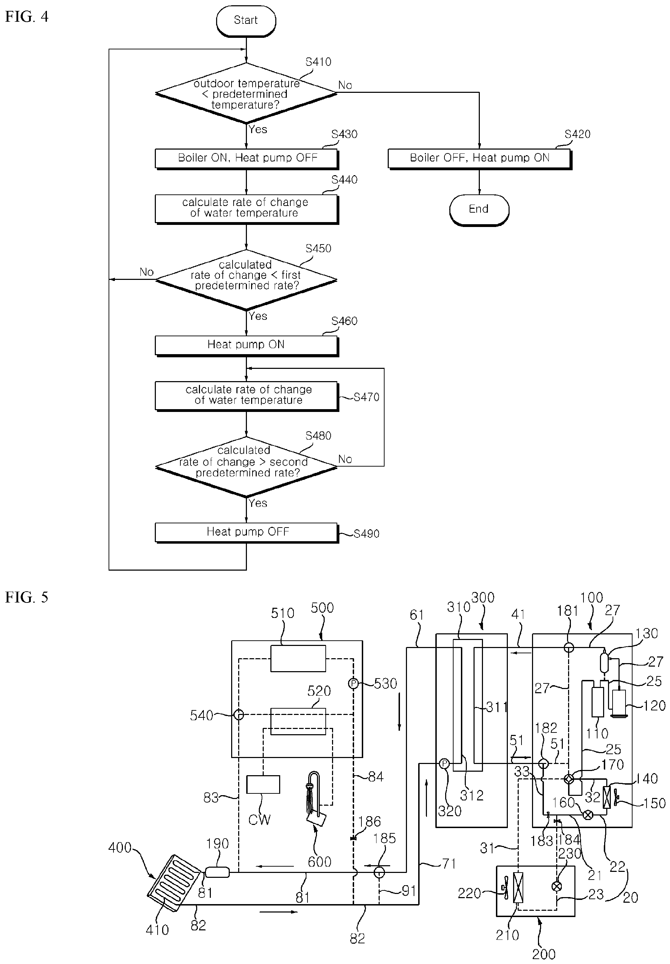

FIG. 4 is a flowchart illustrating a method of operating a heat pump according to an embodiment of the present disclosure, and FIGs. 5 to 7C are views referred to for explanation of a method of operating a heat pump.

Referring to FIG. 4, in operation S410, the heat pump 10 may determine whether an outdoor temperature is less than a reference temperature. For example, the heat pump 10 may determine whether the sensing value of the outdoor temperature sensor is less than a reference temperature (e.g. -7°C) at which the efficiency of the heat pump 10 is lowered.

In operation S420, the heat pump 10 may control the power of the boiler 500 to be turned off when the outdoor temperature is higher than the reference temperature, and control each component included in the heat pump 10 to provide the heating function

Referring to FIG. 5, when the outdoor temperature is higher than the reference temperature, the heat pump 10 may control the boiler 500 to be turned off so that the boiler 500 does not provide the heating function.

In addition, the heat pump 10 may drive the compressor 120 to compress the refrigerant to provide the heating function, and control the refrigerant control valve 181 so that the refrigerant compressed by the compressor 120 is supplied to the water refrigerant heat exchanger 310 of the heat exchange device 300,.

In this case, due to heat exchange with the refrigerant flowing through the refrigerant passage 311 of the water refrigerant heat exchanger 310, water flowing through the water passage 312 of the water refrigerant heat exchanger 310 may be heated. In addition, the heated water flowing through the water passage 312 may flow to the heating device 400 through the hot water-pipe 61 and the heating supply pipe 81. To this end, the heat pump 10 may control the hot water supply control valve 185 to be turned on so that water flows from the hot-water pipe 61 to the heating supply pipe 81

The heat pump 10 may control the boiler valve 186 to be turned off so that water discharged from the heating device 400 to the heating recovery pipe 82 is not supplied to the boiler 500.

Referring to FIG. 4, in operation S430, when the outdoor temperature is less than the reference temperature, the heat pump 10 may control power of the boiler 500 to be turned on, and control each component included in the heat pump 10 to stop providing the heating function through the heat pump 10.

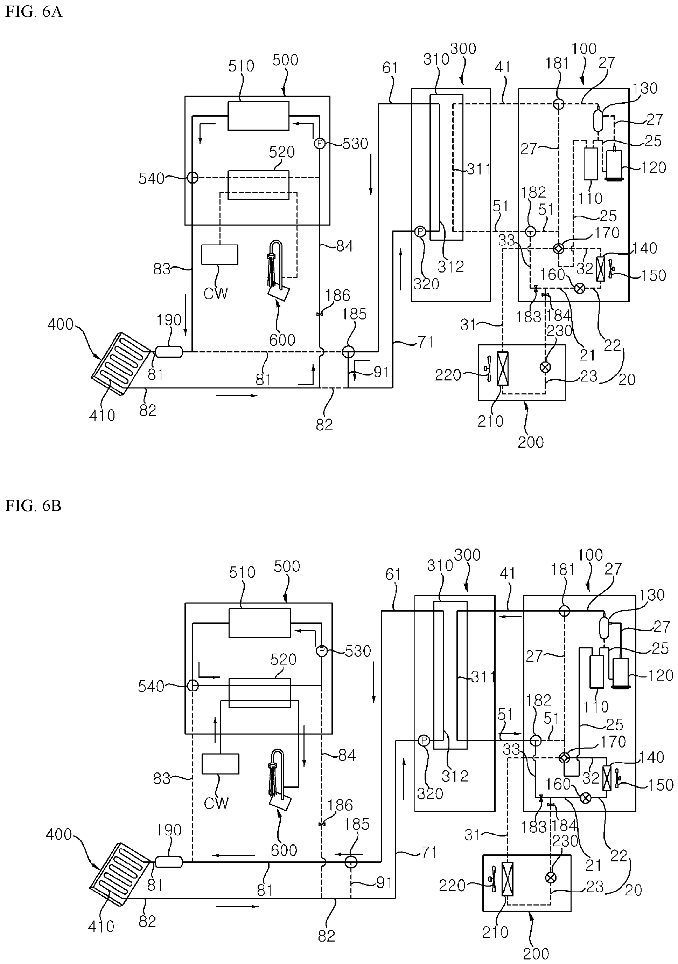

Referring to FIG. 6A, when the outdoor temperature is less than the reference temperature, the heat pump 10 may control the power of the boiler 500 to be turned on so that the heating function may be provided through the boiler 500.

In addition, the heat pump 10 may stop the operation of the compressor 120 and may control the refrigerant control valve 181 so that the refrigerant compressed by the compressor 120 is not supplied to the water refrigerant heat exchanger 310 of the heat exchange device 300.

In addition, the heat pump 10 may control the hot water supply control valve 185 to be turned off so that water does not flow from the hot-water pipe 61 to the heating supply pipe 81, and the water flows to the cold-water pipe 71 through the bypass pipe 91.

In addition, the heat pump 10 may control the boiler valve 186 to be turned on so that water discharged from the heating device 400 to the heating recovery pipe 82 is supplied to the boiler 500.

The recovery pump 320 may operate so that water circulates through the water refrigerant heat exchanger 310 to prevent freezing even when the heating function through the heat pump 10 is stopped.

Referring to FIG. 4, in operation S440, the heat pump 10 may calculate a rate of change of water temperature based on the sensing value of the temperature sensor 190.

For example, the heat pump 10 may calculate the rate of change of the water temperature for a predetermined time (e.g. 5 minutes) after the heating function is stopped. In this case, the heat pump 10 may monitor the rate of change of the water temperature by repeatedly calculating and updating the rate of change of the water temperature.

In operation S450, the heat pump 10 may determine whether the rate of change of the water temperature is less than a first reference rate of change. The first reference rate of change may mean a minimum degree at which the temperature of water flowing through the heating pipes changes when the boiler 500 provides the heating function. For example, the first reference rate of change may be 0°C/min in which the temperature of water flowing through the heating pipe is constant for a predetermined time (e.g. 5 minutes).

The heat pump 10 may determine that the boiler 500 provides the heating function when the rate of change of the water temperature is greater than or equal to the first reference rate of change (e.g. 0°C/min), and operate the operation S410. For example, even after the heating function by the heat pump 10 is stopped, the heat pump 10 may determine that the boiler 500 provides the heating function when the temperature of water flowing through the heating pipes is increased or maintained constant.

In operation S460, the heat pump 10 may determine that the boiler 500 does not provide the heating function when the rate of change of the water temperature is less than the first reference rate of change (e.g. 0°C/min), and control the each component included in the heat pump 10 to provide the heating function.

Referring to FIG. 6B, when the boiler 500 stops providing the heating function in order to provide the hot water supply function according to the demand for hot water supply, the temperature of the water flowing through the heating pipes may continue to decrease because the boiler 500 does not supply hot water to the heating device 400. In this case, when the rate of change of the water temperature is less than the first reference rate of change (e.g. 0°C/min), the heat pump 10 may determine that the boiler 500 has stopped providing the heating function in order to provide the hot water supply function according to the demand for hot water supply.

In addition, the heat pump 10 may drive the compressor 120 to compress the refrigerant, control the refrigerant control valve 181 so that the refrigerant compressed by the compressor 120 is supplied to the water refrigerant heat exchanger 310 of the heat exchange device 300.

In addition, the heat pump 10 may control the hot water supply control valve 185 to be turned on so that water flows from the hot-water pipe 61 to the heating supply pipe 81.

The heat pump 10 may control the boiler valve 186 to be turned off so that water discharged from the heating device 400 to the heating recovery pipe 82 is not supplied to the boiler 500.

Referring to FIG. 4, in operation S470, the heat pump 10 may calculate the rate of change of the water temperature based on the sensing value of the temperature sensor 190. For example, the heat pump 10 may calculate the rate of change of the water temperature for a predetermined time (e.g. 5 minutes) after the provision of the heating function is started. In this case, the heat pump 10 may monitor the rate of change of the water temperature by repeatedly calculating and updating the rate of change of the water temperature flowing through the heating pipes.

In operation S480, the heat pump 10 may determine whether the rate of change of the water temperature exceeds a second reference rate of change greater than the first reference rate of change. The second reference rate of change may mean a maximum degree at which the temperature of water flowing through the heating pipes changes when the heat pump 10 provides the heating function.

When the rate of change of the water temperature while the heat pump 10 provides the heating function is less than or equal to the second reference rate of change (e.g. 2°C/min), the heat pump 10 may determine that only the heat pump 10 provides the heating function, and operate the operation S470

For example, while the heat pump 10 provides the heating function, when the temperature of water changes larger than the maximum temperature increase rate according to the operation of the heat pump 10, the heat pump 10 may determine that the boiler 500 provides the heating function again, and stop providing the heating function of the heat pump 10.

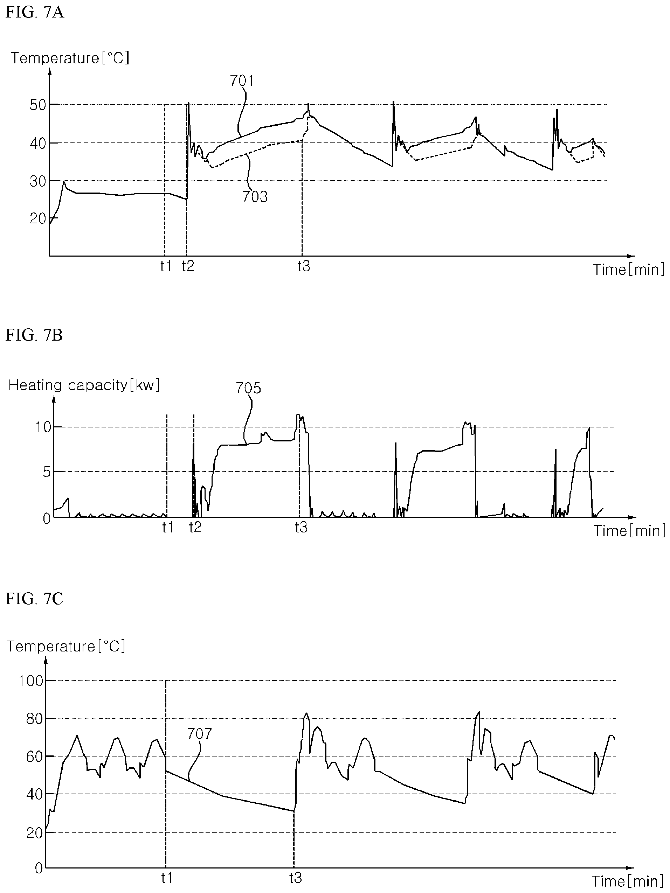

FIG. 7A is a diagram showing a graph 701 of the temperature of water flowing through the hot-water pipe 61 and a graph 703 of the temperature of water flowing through the cold-water pipe 71. FIG. 7B is a diagram showing a graph 705 of heating capacity according to the operation of the heat pump 10. FIG. 7C is a diagram showing a graph 707 of the temperature of water flowing through the boiler supply pipe 83.

Referring to FIGs. 7A to 7C, while the outdoor temperature is less than the reference temperature (e.g. -7°C) and only the boiler 500 provides the heating function, the temperature of the water flowing through the hot-water pipe 61 and the cold-water pipe 71 is kept constant at 30° C. or less, and the heating capacity of the heat pump 10 is also maintained close to 0 kW.

In addition, hot water of about 60° C. may flow through the boiler supply pipe 83 due to the heating function provided by the boiler 500.

From t1 when the user requests hot water, hot water is not discharged from the boiler 500 to the boiler supply pipe 83, and it can be confirmed that the temperature of the water flowing through the boiler supply pipe 83 continues to decrease from t1.

In this case, when hot water does not flow through the boiler supply pipe 83, the temperature of the water flowing through the heating pipe continues to decrease so that the rate of change of the water temperature is calculated to be less than the first reference rate of change (e.g. 0°C/min), and the heat pump 10 may control each component included in the heat pump 10 to provide the heating function.

When the heat pump 10 controls each component included in the heat pump 10 to provide the heating function, the temperature of the water flowing through the hot-water pipe 61 and the cold-water pipe 71 temporarily increases rapidly at t2 because the water flowing in the heating pipes is supplied to the heat exchange device 300.

From t1, due to the heating function of the heat pump 10, the heating capacity of the heat pump 10 is maintained at a certain level, and the temperature of water flowing through the hot-water pipe 61 and the cold-water pipe 71 increases. In addition, due to heat exchange in the heating device 400, there is a difference between the temperature of water flowing through the hot-water pipe 61 and the temperature of water flowing through the cold-water pipe 71.

On the other hand, from t3 when the user's request for hot water supply ends, the boiler 500 provides the heating function again, and the temperature of the water flowing through the boiler supply pipe 83 increases again due to the hot water supplied from the boiler 500.

In this case, hot water supplied from the boiler 500 and hot water supplied from the heat pump 10 may flow through the heating pipes, and the temperature of the water flowing through the heating pipes rapidly increases. Accordingly, it may be calculated that the rate of change of the water temperature exceeds the second reference rate of change (e.g. 2°C/min), and the heat pump 10 stops providing the heating function.

When the heating function of the heat pump 10 is stopped after t3, the temperature of the water flowing through the hot-water pipe 61 and the cold-water pipe 71 decreases again, and the heating capacity of the heat pump 10 is maintained close to 0 kW again.

According to the embodiments of the present disclosure, the heat pump 10 may determine whether the boiler 500 provides the hot water supply function through the temperature sensor 190 arranged in the heating pipes and may provide the heating function through the heat pump 10 when the boiler 500 provides the hot water supply function, so that temporary interruption of the heating function can be prevented even if a separate hot water tank is not provided.

In addition, according to the embodiments of the present disclosure, the heat pump 10 can be interlocked with boilers of various manufacturer because the heat pump 10 may determine whether the boiler 500 provides the hot water supply function even if the heat pump 10 does not use a separate communication function.

In addition, according to the embodiments of the present disclosure, by temporarily using the heat pump 10 while the boiler 500 provides the hot water supply function, it is possible to minimize a decrease in efficiency of the boiler 500 and the heat pump 10 while continuously providing the heating function desired by a user.

Since the accompanying drawings are merely for easily understanding embodiments disclosed herein, it should be understood that the technical idea disclosed herein is not limited by the accompanying drawings, and all changes, equivalents or substitutions are included in the technical scope of the present disclosure.

Likewise, although operations are shown in a specific order in the drawings, it should not be understood that the operations are performed in the specific order shown in the drawings or in a sequential order so as to obtain desirable results, or all operations shown in the drawings are performed. In certain cases, multitasking and parallel processing may be advantageous.

Although the present disclosure has been described with reference to specific embodiments shown in the drawings, it is apparent to those skilled in the art that the present description is not limited to those exemplary embodiments and is embodied in many forms without departing from the scope of the present invention which is described in the following claims. These modifications should not be individually understood from the technical scope of the present disclosure.

## Claims

1. A heat pump comprising:
a compressor (120) configured to compress a refrigerant;
a first temperature sensor (190) disposable in heating pipes (81) connected to a heating device (400) for performing indoor heating and configured to sense a temperature of water flowing through the heating pipes (81); and
a controller (15) configured to control the compressor (120) to operate depending on an operation of a boiler (500);
**characterized in that**:
the controller (160) is configured to:
calculate a rate of change of the temperature of the water flowing through the heating pipes (81) based on a sensing value of the first temperature sensor (190), and
determine whether the boiler (500) provides a heating function based on the calculated rate of change of the temperature of the water.

2. The heat pump according to claim 1, wherein the controller (15) is configured to control the compressor (120) to operate when the boiler (500) does not provide the heating function.

3. The heat pump according to claim 1 or 2, further comprising a second temperature sensor configured to sense an outdoor temperature, wherein the controller (15) is configured to determine whether the boiler (500) provides the heating function based on the sensing value of the first temperature sensor (190) when a sensing value of the second temperature sensor is less than a reference temperature.

4. The heat pump according to claim 3, wherein the controller (15) is configured to:
control the compressor (120) to stop the operation when the sensing value of the second temperature sensor is less than the reference temperature, and/or
control the compressor (120) to operate when the sensing value of the second temperature sensor is higher than the reference temperature.

5. The heat pump according to claim 3 or 4, wherein the controller (15) is configured to:
calculate the rate of change of the temperature of the water flowing through the heating pipes (81) based on the sensing value of the first temperature sensor (190) when the sensing value of the second temperature sensor is less than the reference temperature.

6. The heat pump according to claim 5, wherein the controller (15) is configured to:
determine that the boiler (500) does not provide the heating function when the calculated rate of change of the temperature of the water is less than a first reference rate, and
determine that the boiler (500) provides the heating function when the calculated rate of change of the temperature of the water exceeds a second reference rate greater than the first reference rate.

7. The heat pump according to any one of the preceding claims, further comprising:
a water refrigerant heat exchanger (310) configured to exchange heat with water and the refrigerant compressed by the compressor (120); and
a first valve (185) disposable between the heating pipes (81) and a hot-water pipe (61) through which water discharged from the water refrigerant heat exchanger (310) flows,
preferably the controller (15) is configured to control the first valve (185) to be turned off so that water does not flow from the hot-water pipe (61) to the heating pipes (81)

8. The heat pump according to claim 7, further comprising a bypass pipe (91) connecting the first valve (185) and a cold-water pipe (71) through which water supplied to the water refrigerant heat exchanger (310) flows,
wherein the heating pipes are respectively connectable to the first valve (185) and the boiler (500), and
wherein the water discharged from the water refrigerant heat exchanger (310) and flowing through the hot-water pipe (61) flows through the bypass pipe (91) when the first valve (185) is turned off.

9. The heat pump according to to any one of the preceding claims 3-8, further comprising a second valve (186) disposable in a boiler recovery pipe (84) through which water supplied to the boiler (500) flows,
wherein the controller (15) is configured to control the second valve (186) to be turned off so that water is not supplied to the boiler (500) when the sensing value of the second temperature sensor is higher than the reference temperature, or when the sensing value of the second temperature sensor is less than the reference temperature and the boiler (500) does not provide the heating function.

10. The heat pump according to claim 9, wherein the cold-water pipe (71) is connected to the heating device (400) so that water discharged from the heating device (400) flows through the cold-water pipe 71, and
wherein the boiler recovery pipe (84) is connected to the cold-water pipe (71).

11. A method of operating a heat pump, the method comprising:
calculating a rate of change of a temperature of water flowing through heating pipes (81) based on a sensing value of a first temperature sensor (190), and
determining whether a boiler (500) provides a heating function based on the calculated rate of change of the temperature of the water; and
operating a compressor (120) compressing a refrigerant when the boiler (500) does not provide the heating function,
wherein the first temperature sensor (190) is disposed in the heating pipes (81) connected to a heating device (400) for performing indoor heating and configured to sense the temperature of the water flowing through the heating pipes (81).

12. The method of claim 11, wherein the determining whether the boiler (500) provides the heating function comprises determining whether the boiler (500) provides the heating function based on the sensing value of the first temperature sensor when a sensing value of a second temperature sensor configured to sense an outdoor temperature is less than a reference temperature.

13. The method of claim 11 or 12, further comprising:
stopping the operation of the compressor (120) when the sensing value of the second temperature sensor is less than the reference temperature; and/or
operating the compressor (120) when the sensing value of the second temperature sensor is higher than the reference temperature.

14. The method of claim 12, wherein said
calculating the rate of change of the temperature of the water flowing through the heating pipes (81) based on the sensing value of the first temperature sensor (190) is performed when the sensing value of the second temperature sensor is less than the reference temperature.

15. The method of claim 14, wherein the determining whether the boiler (500) provides the heating function based on the calculated rate of change of the temperature of the water comprises:
determining that the boiler (500) does not provide the heating function when the calculated rate of change of the temperature of the water is less than a first reference rate; and
determining that the boiler (500) provides the heating function when the calculated rate of change of the temperature of the water exceeds a second reference rate greater than the first reference rate.

## Patentansprüche

1. Wärmepumpe, die Folgendes umfasst:
einen Kompressor (120), der konfiguriert ist, ein Kühlmittel zu komprimieren;
einen ersten Temperatursensor (190), der in Heizrohrleitungen (81), die mit einer Heizvorrichtung (400) zum Durchführen einer Innenraumheizung verbunden sind, angeordnet werden kann und konfiguriert ist, eine Temperatur von Wasser, das durch die Heizrohrleitungen (81) strömt, zu erfassen; und
eine Steuereinheit (15), die konfiguriert ist, den Kompressor (120) derart zu steuern, dass er abhängig von einem Betrieb eines Boilers (500) arbeitet;
**dadurch gekennzeichnet, dass**:
die Steuereinheit (160) konfiguriert ist zum:
Berechnen einer Änderungsrate der Temperatur des Wassers, das durch die Heizrohrleitungen (81) strömt, auf der Grundlage eines Messwertes des ersten Temperatursensors (190), und
Bestimmen, ob der Boiler (500) eine Heizfunktion bereitstellt, auf der Grundlage der berechneten Änderungsrate der Temperatur des Wassers.

2. Wärmepumpe nach Anspruch 1, wobei die Steuereinheit (15) konfiguriert ist, den Kompressor (120) derart zu steuern, dass er arbeitet, wenn der Boiler (500) die Heizfunktion nicht bereitstellt.

3. Wärmepumpe nach Anspruch 1 oder 2, die ferner einen zweiten Temperatursensor umfasst, der konfiguriert ist, eine Außentemperatur zu erfassen, wobei die Steuereinheit (15) konfiguriert ist, auf der Grundlage des Messwertes des ersten Temperatursensors (190) zu bestimmen, ob der Boiler (500) die Heizfunktion bereitstellt, wenn ein Messwert des zweiten Temperatursensors kleiner als eine Referenztemperatur ist.

4. Wärmepumpe nach Anspruch 3, wobei die Steuereinheit (15) konfiguriert ist zum:
Steuern des Kompressors (120), derart, dass er den Betrieb anhält, wenn der Messwert des zweiten Temperatursensors kleiner als die Referenztemperatur ist, und/oder
Steuern des Kompressors (120), derart, dass er arbeitet, wenn der Messwert des zweiten Temperatursensors höher als die Referenztemperatur ist.

5. Wärmepumpe nach Anspruch 3 oder 4, wobei die Steuereinheit (15) konfiguriert ist zum:
Berechnen der Änderungsrate der Temperatur des Wassers, das durch die Heizrohrleitungen (81) strömt, auf der Grundlage des Messwertes des ersten Temperatursensors (190), wenn der Messwert des zweiten Temperatursensors kleiner als die Referenztemperatur ist.

6. Wärmepumpe nach Anspruch 5, wobei die Steuereinheit (15) konfiguriert ist zum:
Bestimmen, dass der Boiler (500) die Heizfunktion nicht bereitstellt, wenn die berechnete Änderungsrate der Temperatur des Wassers kleiner als eine erste Referenzrate ist, und
Bestimmen, dass der Boiler (500) die Heizfunktion bereitstellt, wenn die berechnete Änderungsrate der Temperatur des Wassers eine zweite Referenzrate überschreitet, die größer als die erste Referenzrate ist.

7. Wärmepumpe nach einem der vorhergehenden Ansprüche, die ferner Folgendes umfasst:
einen Wasser/Kühlmittel-Wärmetauscher (310), der konfiguriert ist, mit Wasser und dem Kühlmittel, das durch den Kompressor (120) komprimiert worden ist, Wärme auszutauschen; und
ein erstes Ventil (185), das zwischen den Heizrohrleitungen (81) und einer Heißwasserrohrleitung (61), durch die Wasser strömt, das aus dem Wasser/Kühlmittel-Wärmetauscher (310) ausgelassen wird, angeordnet werden kann,
wobei die Steuereinheit (15) vorzugsweise konfiguriert ist, das erste Ventil (185) derart zu steuern, dass es ausgeschaltet ist, derart, dass kein Wasser aus der Heißwasserrohrleitung (61) zu den Heizrohrleitungen (81) strömt.

8. Wärmepumpe nach Anspruch 7, die ferner eine Umgehungsrohrleitung (91) umfasst, die das erste Ventil (185) und eine Kaltwasserrohrleitung (71), durch die Wasser strömt, das dem Wasser/Kühlmittel-Wärmetauscher (310) zugeführt wird, verbindet,
wobei die Heizrohrleitungen (81) j eweils mit dem ersten Ventil (185) und dem Boiler (500) verbunden werden können und
wobei das Wasser, das aus dem Wasser/Kühlmittel-Wärmetauscher (310) ausgelassen wird und durch die Heißwasserrohrleitung (61) strömt, durch die Umgehungsrohrleitung (91) strömt, wenn das erste Ventil (185) ausgeschaltet ist.

9. Wärmepumpe nach einem der vorhergehenden Ansprüche 3-8, die ferner ein zweites Ventil (186) umfasst, das in einer Boiler-Rückführungsrohrleitung (84), durch die Wasser strömt, das dem Boiler (500) zugeführt wird, angeordnet werden kann,
wobei die Steuereinheit (15) konfiguriert ist, das zweite Ventil (186) derart zu steuern, dass es ausgeschaltet ist, derart, dass dem Boiler (500) kein Wasser zugeführt wird, wenn der Messwert des zweiten Temperatursensors höher als die Referenztemperatur ist oder wenn der Messwert des zweiten Temperatursensors kleiner als die Referenztemperatur ist und der Boiler (500) die Heizfunktion nicht bereitstellt.

10. Wärmepumpe nach Anspruch 9, wobei die Kaltwasserrohrleitung (71) mit der Heizvorrichtung (400) verbunden ist, derart, dass Wasser, das aus der Heizvorrichtung (400) ausgelassen wird, durch die Kaltwasserrohrleitung (71) strömt, und
wobei die Boiler-Rückführungsrohrleitung (84) mit der Kaltwasserrohrleitung (71) verbunden ist.

11. Verfahren zum Betreiben einer Wärmepumpe, wobei das Verfahren Folgendes umfasst:
Berechnen einer Änderungsrate der Temperatur von Wasser, das durch Heizrohrleitungen (81) strömt, auf der Grundlage eines Messwertes eines ersten Temperatursensors (190), und
Bestimmen, ob ein Boiler (500) eine Heizfunktion bereitstellt, auf der Grundlage der berechneten Änderungsrate der Temperatur des Wassers; und
Betreiben eines Kompressors (120), der ein Kühlmittel komprimiert, wenn der Boiler (500) die Heizfunktion nicht bereitstellt,
wobei der erste Temperatursensor (190) in den Heizrohrleitungen (81), die mit einer Heizvorrichtung (400) zum Durchführen einer Innenraumheizung verbunden sind, angeordnet ist und konfiguriert ist, die Temperatur des Wassers, das durch die Heizrohrleitungen (81) strömt, zu erfassen.

12. Verfahren nach Anspruch 11, wobei das Bestimmen, ob der Boiler (500) die Heizfunktion bereitstellt, das Bestimmen, ob der Boiler (500) die Heizfunktion bereitstellt, auf der Grundlage des Messwertes des ersten Temperatursensors, wenn ein Messwert eines zweiten Temperatursensors, der konfiguriert ist, eine Außentemperatur zu messen, kleiner als eine Referenztemperatur ist, umfasst.

13. Verfahren nach Anspruch 11 oder 12, das ferner Folgendes umfasst:
Anhalten des Betriebs des Kompressors (120), wenn der Messwert des zweiten Temperatursensors kleiner als die Referenztemperatur ist; und/oder
Betreiben des Kompressors (120), wenn der Messwert des zweiten Temperatursensors höher als die Referenztemperatur ist.

14. Verfahren nach Anspruch 12, wobei das Berechnen der Änderungsrate der Temperatur des Wassers, das durch die Heizrohrleitungen (81) strömt, auf der Grundlage des Messwertes des ersten Temperatursensors (190) durchgeführt wird, wenn der Messwert des zweiten Temperatursensors kleiner als die Referenztemperatur ist.

15. Verfahren nach Anspruch 14, wobei das Bestimmen, ob der Boiler (500) die Heizfunktion bereitstellt, auf der Grundlage der berechneten Änderungsrate der Temperatur des Wassers Folgendes umfasst:
Bestimmen, dass der Boiler (500) die Heizfunktion nicht bereitstellt, wenn die berechnete Änderungsrate der Temperatur des Wassers kleiner als eine erste Referenzrate ist; und
Bestimmen, dass der Boiler (500) die Heizfunktion bereitstellt, wenn die berechnete Änderungsrate der Temperatur des Wassers eine zweite Referenzrate überschreitet, die größer als die erste Referenzrate ist.

## Revendications

1. Pompe à chaleur comportant :
un compresseur (120) configuré pour comprimer un fluide frigorigène ;
un premier capteur de température (190) pouvant être disposé dans des tuyaux de chauffage (81) raccordés à un dispositif de chauffage (400) pour réaliser un chauffage d'intérieur et configuré pour détecter une température d'eau s'écoulant à travers les tuyaux de chauffage (81) ; et
une commande (15) configurée pour commander au compresseur (120) de fonctionner selon un fonctionnement d'une chaudière (500) ;
**caractérisée en ce que** :
la commande (160) est configurée pour :
calculer une vitesse de variation de la température de l'eau s'écoulant à travers les tuyaux de chauffage (81) sur la base d'une valeur de détection du premier capteur de température (190), et
déterminer si la chaudière (500) fournit une fonction de chauffage sur la base de la vitesse de variation calculée de la température de l'eau.

2. Pompe à chaleur selon la revendication 1, dans laquelle la commande (15) est configurée pour commander au compresseur (120) de fonctionner lorsque la chaudière (500) ne fournit pas la fonction de chauffage.

3. Pompe à chaleur selon la revendication 1 ou 2, comportant en outre un second capteur de température configuré pour détecter une température extérieure, dans lequel la commande (15) est configurée pour déterminer si la chaudière (500) fournit la fonction de chauffage sur la base de la valeur de détection du premier capteur de température (190) lorsqu'une valeur de détection du second capteur de température est inférieure à une température de référence.

4. Pompe à chaleur selon la revendication 3, dans laquelle la commande (15) est configurée pour :
commander au compresseur (120) d'arrêter le fonctionnement lorsque la valeur de détection du second capteur de température est inférieure à la température de référence, et/ou
commander au compresseur (120) de fonctionner lorsque la valeur de détection du second capteur de température est supérieure à la température de référence.

5. Pompe à chaleur selon la revendication 3 ou 4, dans laquelle la commande (15) est configurée pour :
calculer la vitesse de variation de la température de l'eau s'écoulant à travers les tuyaux de chauffage (81) sur la base de la valeur de détection du premier capteur de température (190) lorsque la valeur de détection du second capteur de température est inférieure à la température de référence.

6. Pompe à chaleur selon la revendication 5, dans laquelle la commande (15) est configurée pour :
déterminer que la chaudière (500) ne fournit pas la fonction de chauffage lorsque la vitesse de variation calculée de la température de l'eau est inférieure à une première vitesse de référence, et
déterminer que la chaudière (500) fournit la fonction de chauffage lorsque la vitesse de variation calculée de la température de l'eau dépasse une seconde vitesse de référence supérieure à la première vitesse de référence.

7. Pompe à chaleur selon l'une quelconque des revendications précédentes, comportant en outre :
un échangeur de chaleur eau-fluide frigorigène (310) configuré pour échanger de la chaleur avec de l'eau et le fluide frigorigène comprimé par le compresseur (120) ; et
une première soupape (185) pouvant être disposée entre les tuyaux de chauffage (81) et un tuyau d'eau chaude (61) à travers lequel de l'eau évacuée de l'échangeur de chaleur eau-fluide frigorigène (310) s'écoule,
la commande (15) est de préférence configurée pour commander l'arrêt de la première soupape (185) de sorte que l'eau ne s'écoule pas à partir du tuyau d'eau chaude (61) vers les tuyaux de chauffage (81).

8. Pompe à chaleur sont la revendication 7, comportant en outre un tuyau de dérivation (91) reliant la première soupape (185) et un tuyau d'eau froide (71) à travers lequel de l'eau fournie à l'échangeur de chaleur eau-fluide frigorigène (310) s'écoule,
dans laquelle les tuyaux de chauffage peuvent être respectivement raccordés à la première soupape (185) et à la chaudière (500), et
dans laquelle l'eau évacuée de l'échangeur de chaleur eau-fluide frigorigène (310) et s'écoulant à travers le tuyau d'eau chaude (61) s'écoule à travers le tuyau de dérivation (91) lorsque la première soupape (185) est arrêtée.

9. Pompe à chaleur selon l'une quelconque des revendications 3 à 8 précédentes, comportant en outre une seconde soupape (186) pouvant être disposée dans un tuyau de récupération de chaudière (84) à travers lequel l'eau fournie à la chaudière (500) s'écoule,
dans laquelle la commande (15) est configurée pour commander l'arrêt de la seconde soupape (186) de sorte que l'eau n'est pas fournie à la chaudière (500) lorsque la valeur de détection du second capteur de température est supérieure à la température de référence, ou lorsque la valeur de détection du second capteur de température est inférieure à la température de référence et que la chaudière (500) ne fournit pas la fonction de chauffage.

10. Pompe à chaleur selon la revendication 9, dans laquelle le tuyau d'eau froide (71) est raccordé au dispositif de chauffage (400) de sorte que de l'eau évacuée du dispositif de chauffage (400) s'écoule à travers le tuyau d'eau froide (71), et
dans laquelle le tuyau de récupération de chaudière (84) est raccordé au tuyau d'eau froide (71).

11. Procédé de fonctionnement d'une pompe à chaleur, le procédé comportant les étapes consistant à :
calculer une vitesse de variation d'une température d'eau s'écoulant à travers des tuyaux de chauffage (81) sur la base d'une valeur de détection d'un premier capteur de température (190), et
déterminer si une chaudière (500) fournit une fonction de chauffage sur la base de la vitesse de variation calculée de la température de l'eau ; et
faire fonctionner un compresseur (120) comprimant un fluide frigorigène lorsque la chaudière (500) ne fournit pas la fonction de chauffage,
dans lequel le premier capteur de température (190) est disposé dans les tuyaux de chauffage (81) raccordés à un dispositif de chauffage (400) pour réaliser un chauffage d'intérieur et configuré pour détecter la température de l'eau s'écoulant à travers les tuyaux de chauffage (81).

12. Procédé selon la revendication 11, dans lequel la détermination de si la chaudière (500) fournit la fonction de chauffage comporte de déterminer si la chaudière (500) fournit la fonction de chauffage sur la base de la valeur de détection du premier capteur de température lorsqu'une valeur de détection d'un second capteur de température configuré pour détecter une température extérieure est inférieure à une température de référence.

13. Procédé selon la revendication 11 ou 12, comportant en outre les étapes consistant à :
arrêter le fonctionnement du compresseur (120) lorsque la valeur de détection du second capteur de température est inférieure à la température de référence ; et/ou
faire fonctionner le compresseur (120) lorsque la valeur de détection du second capteur de température est supérieure à la température de référence.

14. Procédé selon la revendication 12, dans lequel ledit calcul de la vitesse de variation de la température de l'eau s'écoulant à travers les tuyaux de chauffage (81) sur la base de la valeur de détection du premier capteur de température (190) est réalisé lorsque la valeur de détection du second capteur de température est inférieure à la température de référence.

15. Procédé selon la revendication 14, dans lequel la détermination de si la chaudière (500) fournit la fonction de chauffage sur la base de la vitesse de variation calculée de la température de l'eau comporte les étapes consistant à :
déterminer que la chaudière (500) ne fournit pas la fonction de chauffage lorsque la vitesse de variation calculée de la température de l'eau est inférieure à une première vitesse de référence ; et
déterminer que la chaudière (500) fournit la fonction de chauffage lorsque la vitesse de variation calculée de la température de l'eau dépasse une seconde vitesse de référence supérieure à la première vitesse de référence.
